**Europäisches Patentamt**

(19) **European Patent Office**

**Office européen des brevets**

(11) Publication number : **0 317 533 B1**

(12) # EUROPEAN PATENT SPECIFICATION

(45) Date of publication of patent specification :
11.03.92 Bulletin 92/11

(51) Int. Cl.⁵ : **F16J 15/34**

(21) Application number : **88850366.1**

(22) Date of filing : **26.10.88**

(54) **Shaft seal.**

(30) Priority : **17.11.87 SE 8704504**

(43) Date of publication of application :
**24.05.89 Bulletin 89/21**

(45) Publication of the grant of the patent :
**11.03.92 Bulletin 92/11**

(84) Designated Contracting States :
**DE FR GB IT**

(56) References cited :
**FR-A- 2 070 257**
**FR-A- 2 385 013**
**US-A- 3 527 465**
**US-A- 4 407 513**

(73) Proprietor : **SKF Nova AB**
**S-415 50 Göteborg (SE)**

(72) Inventor : **Lind, Björn**
**Billdals Häggväg 8**
**S-427 00 Billdal (SE)**

(74) Representative : **Forsberg, Lars-Ake et al**
**AB SKF Patent Department**
**S-415 50 Göteborg (SE)**

EP 0 317 533 B1

## Description

### Technical field

The present invention refers to a shaft wherein at least one contact surface of a fixed structural part, e.g. a bearing housing, cooperates with at least one contact surface of a unit rotating together with the shaft, whereby a pressure medium is arranged to be supplied between said surfaces for keeping the surfaces spaced apart.

### Background of the invention

Shaft seals are earlier known (see e.g. FR-A-2 385 013), which consists of two discs one of which is fixed to the shaft and the other one being fixed to the bearing housing. By means of a pressure medium - gas or liquid - which is introduced in the slit between the discs, is created a film, which on one hand eliminates friction between the discs and on the other hand provides the sealing. If the pressure medium during operation should cease and the film between the discs thus should disappear, then the seal would break down if no particular steps have been taken for preventing this. Another drawback is that such a seal has a very low ability of absorbing any shaft obliquities.

### Purpose and most essential features of the invention

The purpose of the present invention is to provide a shaft seal of the type mentioned in the introduction, which has an uncomplicated design and provides an efficient and friction free seal, and which furthermore can take up shaft obliquities. This has been achieved in that the unit rotating together with the shaft is fitted to the shaft in such a manner that a certain obliquity and movement of the shaft in axial direction relative to said unit is permitted, and that a force is caused to act upon on said unit, which force strives to displace the unit towards the contact surface of the fixed structural part and is counteracted by said pressure medium, whereby, if the supply of pressure medium should cease during operation, the unit will be displaced on the shaft towards the contact surface of the fixed structural part, thereby closing the slot between the contact surfaces and causing a relative rotation between the unit and the shaft.

### Description of the drawing

The invention hereinafter will be further described with reference to the accompanying drawing, which shows a section through a shaft having fitted thereto a shaft seal according to one embodiment of the invention.

### Description of the invention

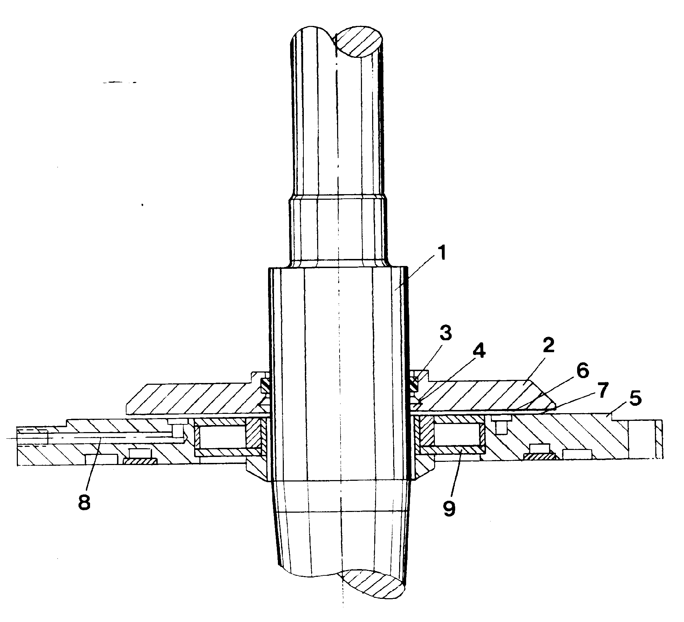

In the drawing 1 designates a shaft carrying a disc 2, which by means of a rubber ring 3 is held at and sealed off against the shaft 1. The disc 2 thus will rotate together with the shaft 1. A groove 4 is provided in the disc 2 below the rubber ring 3, in which groove can be collected fragments torn off from the rubber ring 3. In front of the rotating disc 2 is provided a fixed disc 5, e. g. a portion of the bearing housing through which the shaft 1 extends.

The rotating disc 2 and the fixed disc 5 have opposed contact surfaces 6 and 7 resp., which by means of a pressure medium, gas or liquid, are kept apart. The pressure medium is supplied via a duct 8 in the fixed disc 5 to the space between the surfaces 6 and 7.

Between the fixed disc 5 and the rotating disc 2 is arranged to act a closing force. In the embodiment shown this force is constituted by a magnetic force, in that the fixed disc 5 is equipped with magnets 9 and the rotating disc 2 is made of a magnetic material. The closing force can also be effected in another manner, e g by means of spring force acting upon the rotating disc 2. The closing force shall be so big that, at loss of the pressure medium, the rotating disc 2 is displaced to engagement with the fixed disc 5 and closes the slot therebetween.

The pressure medium is supplied to the space between the surfaces 6 and 7 via the duct 8 and provides a gas or liquid film therebetween, which film keeps the discs 2 and 5 separated. As the rotating disc 2 is fitted to the shaft 1 only by means of a sealing ring 3 a certain obliquity of the shaft 1 is permitted relative to the disc 2, and also a certain movement of the shaft 1 in the longitudinal direction caused by thermal expansion.

If the supply of pressure medium should cease during operation then the rotating disc 2 would be displaced on the shaft 1 towards the fixed disc 5, as mentioned above, thereby closing the slot between them. The shaft hereby will slip in the sealing ring 3 and a seal breakdown is prevented.

### Claims

1. A shaft seal wherein at least one contact suface (7) of a fixed structural part (5), such as a bearing housing, cooperates with at least one contact surface (6) of a unit (2) rotating together with the shaft (1), whereby a pressure medium is arranged to be supplied between said surfaces (6, 7) for providing the sealing and for keeping the surfaces spaced apart to eliminate friction,
**characterized in that**
the unit (2) rotating together with the shaft (1) is connected to the shaft (1) by means of a flexible element (3) in such a manner that a certain obliquity and movement of the shaft in axial direction relative to said unit is permitted, and that a means is provided exerting a force to act upon said unit (2), which force strives to displace the unit towards the contact surface (7) of the fixed structural part (5) and is counteracted by said pressure medium, whereby, upon loss of pressure, said unit (2) will be displaced on the shaft (1) towards the fixed structural part (5), thereby closing the slot between the contact surfaces (6, 7) and causing a relative rotation between said unit (2) and the shaft (1).

2. A shaft seal as claimed in claim 1, wherein the flexible element (3) is an elastic sealing ring (3).

3. A shaft seal as claimed in claim 1 or 2, wherein said force is effected by means of a magnetic force.

4. A shaft seal as claimed in claim 1 or 2, wherein said force is effected by means of spring force.

## Patentansprüche

1. Wellendichtung mit zumindestens einer Berührungsfläche (7) eines stillstenhenden Bauteiles (5), wie einem Lagergehäuse, mit zumindestens einer Berührungsfläche (6) einer mit der Welle (1) umlaufenden Einheit (2), wobei ein Druckmittel zwischen den genannten Flächen (6, 7) zur Dichtwirkung angeordnet ist um die Flächen zur Vermeidung von Reibung getrennt zu halten, **dadurch gekennzeichnet**, dass die mit der Welle (1) umlaufende Einheit (2) mittels eines biegsamen Elementes (3) mit der Welle (1) auf solche Weise verbunden ist, dass eine gewisse Schiefstellung und Bewegung der Welle in achsialer Richtung relativ dieser Einheit zulässig ist und dass ein Element angeordnet ist, welches eine Kraft auf die genannte Einheit ausübt, welche Kraft bestrebt ist die Einheit in Richtung zur Berührungsfläche (7) des stillstenhenden Bauteiles (5) zu verschieben und vom genannten Druckmittel entgegengewirkt wird, wobei die genannte Einheit (2) bei Druckabfall auf der Welle (1) verschoben wird in Richtung zum stillstenhenden Bauteil (5) und damit den Spalt zwischen den Berührungsflächen (6, 7) schliesst und eine relative Drehbewegung zwischen der Einheit ()2) und der Welle (1) bewirkt.

2. Wellendichtung gemäss Patentanspruch 1, **dadurch gekennzeichnet**, dass das biegsame Element (3) ein elastischer Dichtungsring (3) ist.

3. Wellendichtung gemäss Patentanspruch 1 oder 2, **dadurch gekennzeichnet**, dass die Kraft mit Hilfe einer Magnetkraft erzeugt wird.

4. Wellendichtung gemäss Patentanspruch 1 oder 2, **dadurch gekennzeichnet**, dass die Kraft mit Hilfe einer Federkraft erzeugt wird.

## Revendications

1. Joint d'étanchéité pour arbre où au moins une surface de contact (7) d'un élément structural fixe (5), tel qu'un corps de palier, coopère avec au moins une surface de contact (6) d'un ensemble (2) tournant avec l'arbre (1), un agent de pression étant prévu de façon à être acheminé entre lesdites surfaces (6, 7) pour assurer l'étanchéité et pour maintenir les surfaces séparées, pour éliminer le frottement, caractérisé en ce que l'ensemble (2) tournant avec l'arbre (1) est en liaison avec l'arbre (1) au moyen d'un élément flexible (3) de telle façon qu'une certaine obliquité et un certain mouvement de l'arbre dans le sens axial, par rapport audit ensemble sont possibles et qu'un moyen est prévu pour exercer une force sur ledit ensemble (2), cette force tendant à déplacer l'ensemble vers la surface de contact (7) de l'élément structural fixe (5) et étant contrecarrée par ledit agent de pression, de sorte que, en cas de perte de pression, ledit ensemble (2) sera déplacé sur l'arbre (1) vers l'élément structural fixe (5), fermant ainsi la fente entre les surfaces de contact (6, 7) et causant une rotation relative entre ledit ensemble (2) et l'arbre (1).

2. Joint d'étanchéité pour arbre selon revendication 1, où l'élément flexible (3) est une bague d'étanchéité élastique (3).

3. Joint d'étanchéité pour arbre selon revendication 1 ou 2, où ladite force est réalisée au moyen d'une force magnétique.

4. Joint d'étanchéité pour arbre selon revendication 1 ou 2 où ladite force est réalisée au moyen de ressorts.

1

3
4
2
6
7
5

8

9